Europäisches Patentamt

European Patent Office

Office européen des brevets

(11) Numéro de publication: **0 229 958**
**A1**

(12) **DEMANDE DE BREVET EUROPEEN**

(21) Numéro de dépôt: **86116967.0**

(22) Date de dépôt: **06.12.86**

(51) Int. Cl.⁴: **F 16 H 1/28**

(30) Priorité: **23.12.85 FR 8519229**

(43) Date de publication de la demande: **29.07.87**
**Bulletin 87/31**

(84) Etats contractants désignés: **CH DE GB LI**

(71) Demandeur: **MICROBO S.A., Avenue Beauregard 16,**
**CH-2035 Corcelles (CH)**

(72) Inventeur: **Pruvot, Sylvain, Route du Burenoz 31,**
**CH-1092 Belmont (CH)**

(74) Mandataire: **Barbeaux, Bernard et al, ICB Ingénieurs**
**Conseils en Brevets SA Faubourg du Lac 6,**
**CH-2501 Bienne (CH)**

(54) **Réducteur de vitesse.**

㉗ L'invention concerne les réducteurs de vitesse à trains épicycloïdaux dans lesquels plusieurs pignons satellites (7, 8) montés sur un plateau (24) solidaire d'un arbre de sortie engrènent, d'une part, avec un pignon planétaire (6) porté par un arbre d'entrée (5) et, d'autre part, avec la denture intérieure d'une couronne (39) radialement déformable et immobilisée en rotation qui les entoure.

Conformément à l'invention, chaque pignon satellite est porté par une lame (25, 26) dont une extrémité (31, 32) est liée rigidement au plateau et qui est déformable élastiquement dans le direction (F, F') qui permet à la couronne de presser ce pignon satellite contre le pignon planétaire, tout en étant rigide dans les autres directions.

Ceci permet d'utiliser des pignons satellites beaucoup plus simples que ceux des réducteurs connus du même genre et facilite beaucoup la miniaturisation de ces derniers.

Un réducteur selon l'invention peut donc être employé avantageusement dans des machines, par exemple des robots, de petites dimensions.

0229958

Cas 442
BB/cr

## REDUCTEUR DE VITESSE

La présente invention concerne les réducteurs de vitesse et, plus précisément, les réducteurs à trains épicycloïdaux dans lesquels un même pignon planétaire, couplé à un arbre d'entrée, entraîne plusieurs pignons satellites répartis autour de lui et couplés à un arbre de sortie.

Un réducteur de vitesse perfectionné de ce genre a fait l'objet de la demande de brevet français publiée sous le numéro 2 382 626.

Tel qu'il est décrit dans cette demande, le réducteur comprend trois pignons satellites dont les axes sont solidaires d'un plateau auquel est fixé l'arbre de sortie et qui engrènent, d'une part, avec un planétaire de petit diamètre porté par l'arbre d'entrée et, d'autre part, avec la denture intérieure d'une couronne radialement déformable qui les entoure et qui est disposée concentriquement par rapport à l'arbre d'entrée.

Cette couronne, dont la denture a un diamètre primitif inférieur au diamètre du cercle circonscrit aux cercles primitifs des pignons satellites lorsque ceux-ci sont en prise avec le planétaire et en appui sur lui, est prolongée d'un côté par une partie cylindrique mince qui la relie à une autre partie cylindrique qui, elle, est relativement massive et fixée au couvercle du carter. Grâce à cette partie mince, suffisamment longue la couronne peut, tout en étant immobile en rotation, se déformer radialement sans être gênée par sa fixation. De plus, pour éviter qu'elle s'épanouisse du côté opposé à cette fixation quand les pignons satellites la déforment, elle est prolongée, de ce côté aussi, par une partie cylindrique mince, sensiblement de même longueur que l'autre, qui aboutit à une partie coudée à angle droit simulant la partie massive de fixation pour rendre l'ensemble symétrique.

Dans ce réducteur, la couronne doit normalement permettre, grâce à la possibilité qu'elle a de se déformer, de supprimer tout jeu dans le train épicycloïdal formé par les pignons mais pour cela il faut qu'elle puisse presser les pignons satellites sur le pignon d'attaque. Pour cette raison chaque pignon satellite comprend une lame flexible de forme assez complexe, brasée ou soudée en son milieu dans une fente que présente l'axe de ce pignon et à ses extrémités dans des rainures d'un moyeu qui a un diamètre interne légèrement supérieur au diamètre de cet axe autour duquel il est placé et sur lequel est frittée la bague interne d'un roulement à aiguilles dont la bague externe est dentée. Naturellement, pour permettre à la couronne de jouer son rôle, la lame est disposée perpendiculairement à la droite qui joint le centre de l'axe du pignon à celui de l'arbre qui porte le planétaire. Par ailleurs, pour éviter que la lame soit soumise à des contraintes inutiles et assurer la meilleure rigidité torsionnelle possible au réducteur, l'axe du pignon présente deux tenons diamétralement opposés et situés dans une direction perpendiculaire à la lame qui coulissent dans deux rainures correspondantes du moyeu.

Enfin, pour empêcher la couronne de se dilater lorsque le réducteur est soumis à des charges élevées on prévoit autour de celle-ci un anneau très rigide monté flottant mais avec un débattement axial limité, en laissant un jeu radial aussi faible que possible entre les deux. On envisage également dans la demande de brevet en question de remplacer cet anneau par un bossage à l'intérieur du carter.

Un tel réducteur a l'avantage d'être compact et de présenter non seulement un jeu pratiquement nul et une très bonne rigidité torsionnelle mais aussi une inertie primaire très faible. De plus, il peut être facilement réglé simplement en changeant la pièce dont fait partie la couronne.

Le problème est qu'il se prête mal à une miniaturisation qui permettrait de l'utiliser avantageusement dans des machines, par exemple des robots, de petites dimensions et ceci essentiellement à cause de la structure particulère et relativement complexe de ses pignons satellites. Il n'est pratiquement pas possible en effet de réaliser des pignons de ce genre de petite taille sans que leur prix de revient devienne excessif.

L'invention a avant tout pour but de supprimer cet inconvénient et ce but est atteint grâce au fait que dans un réducteur conforme à l'invention, qui comprend lui aussi un plateau couplé à son arbre de sortie, sur lequel sont montés les pignons satellites, et une couronne radialement déformable, dentée intérieurement et immobilisée en rotation, placée autour de ceux-ci, chaque pignon satellite est porté par une lame dont une extrémité est liée rigidement au plateau et qui est déformable élastiquement dans la direction qui permet à la couronne de le presser radialement contre le pignon d'attaque, tout en étant rigide dans les autres directions.

Comme on le verra par la suite, il est possible grâce à cela d'utiliser comme pignons satellites des pignons simples que l'on trouve à bas prix dans le commerce et qui peuvent avoir des dimensions réduites.

De plus, il est possible de s'arranger pour que ces pignons puissent être changés facilement et rapidement, ce qui n'est pas le cas dans le réducteur connu dont on a parlé.

D'autre part, dans ce réducteur connu, il n'y a pas que les pignons satellites qui sont compliqués. Il y a aussi les moyens par lesquels la couronne est immobilisée en rotation.

L'invention a également pour but de fournir un réducteur dans lequel ces moyens sont simplifiés et ce but est atteint en prévoyant seulement pour tenir la couronne des languettes métalliques qui ont une de leurs extrémités liée rigidement à elle et l'autre solidaire d'une partie fixe du réducteur, par exemple son carter si il en a un.

D'autres caractéristiques et avantages du réducteur selon l'invention apparaîtront à la lecture de la description qui suit d'un mode préféré d'exécution, description qui se réfère au dessin annexé sur lequel:

- la figure 1 est une vue en coupe axiale de ce mode d'exécution, suivant le plan I-I de la figure 2;

- la figure 2 est une vue en coupe radiale suivant le plan II-II de la figure 1;

- la figure 3 est une vue en coupe axiale partielle de l'ensemble formé par l'arbre de sortie, le plateau et les lames qui portent les pignons satellites, suivant le plan III-III représenté sur la figure 2; et

- la figure 4 est une vue en perspective de l'ensemble constitué par la couronne et les moyens qui la tiennent.

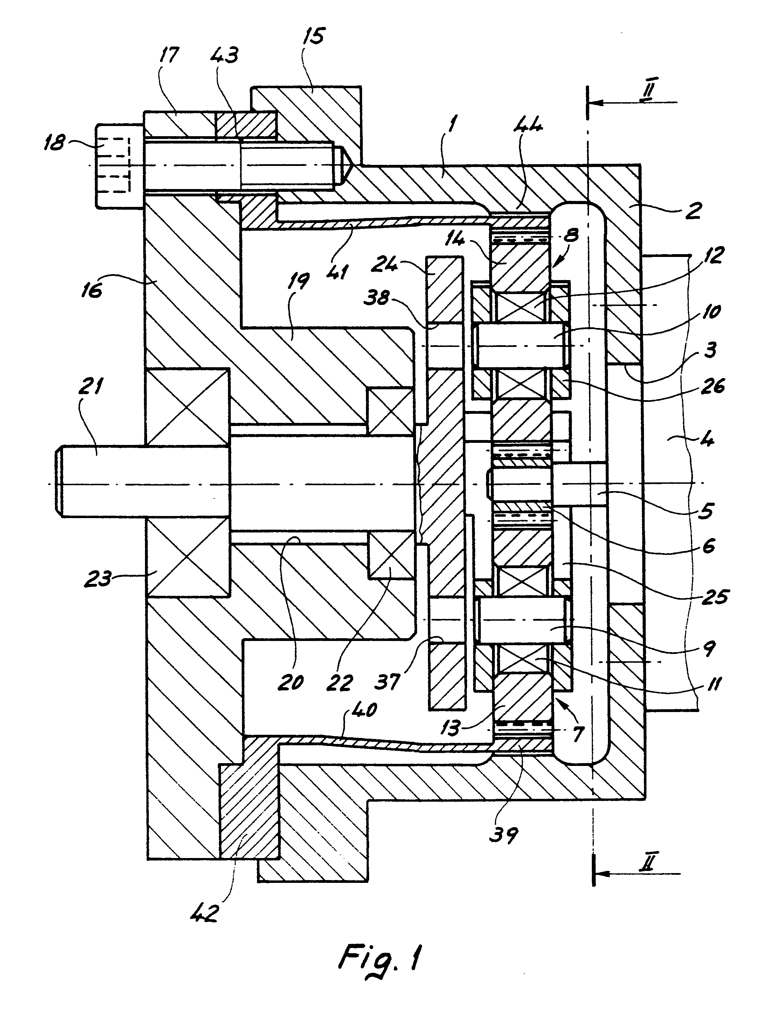

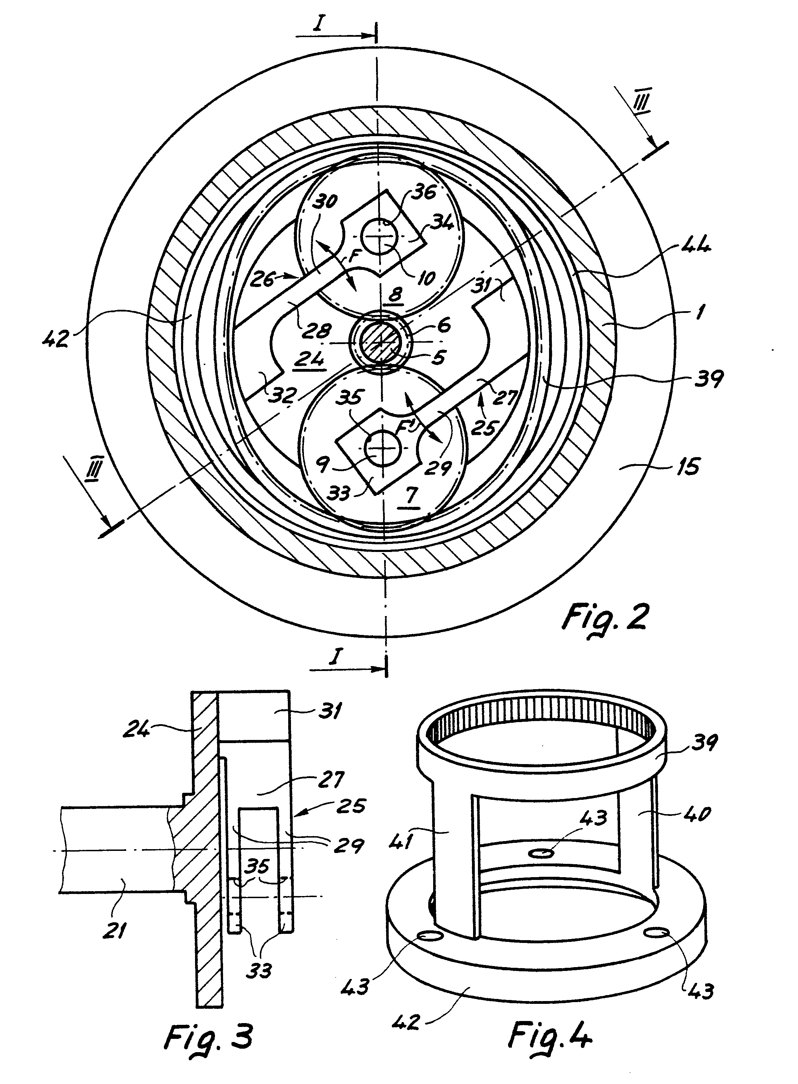

Tel qu'il est représenté aux figures 1 et 2, le réducteur de vitesse selon l'invention comprend un carter essentiellement cylindrique 1 avec un fond 2 muni d'une ouverture centrale 3 par lequel il est fixé grâce à des moyens adéquats non représentés, par exemple des vis, à l'avant d'un moteur 4. L'arbre 5 de ce moteur qui pénètre ainsi à l'intérieur du carter et qui constitue aussi, dans ce cas, l'arbre d'entrée du réducteur porte à son extrémité un pignon de petit diamètre 6 avec lequel engrènent deux pignons satellites identiques 7 et 8, disposés sensiblement symétriquement par rapport à son axe de rotation.

Comme on peut le voir sur la figure 1, chacun de ces pignons satellites 7 et 8 est simplement formé d'une goupille 9, respectivement 10, qui constitue son axe, d'un roulement à billes 11, respectivement 12, chassé sur cette goupille et d'une bague externe 13, respectivement 14, qui porte la denture et qui est par exemple frettée sur celle non représentée du roulement.

Par ailleurs, du côté opposé à son fond, le carter 1 présente une bride 15 qui permet à un couvercle 16 muni lui aussi d'une bride 17, d'être tenu par des vis 18.

Ce couvercle 16 qui, pour une raison qui apparaîtra par la suite, présente en son milieu un bossage cylindrique interne 19 est percé d'un trou central 20 dans lequel passe un arbre de sortie 21 qui peut tourner grâce à des paliers 22 et 23 situés aux deux bouts de ce trou autour d'un axe pratiquement confondu avec celui de l'arbre 5 du moteur 4 et qui porte à son extrémité un plateau circulaire 24 centré sur cet axe.

Conformément à ce qui a été dit précédemment, ce plateau 24 porte à son tour deux lames 25 et 26 sensiblement parallèles entre elles aux extrémités libres desquelles sont fixés respectivement les axes des pignons satellites 7 et 8 et qui sont élastiques dans la direction qui permet de presser radialement ces pignons sur le pignon d'attaque 6 ou de les en écarter, ce qui est symbolisé par les doubles flèches F et F' de la figure 2.

En d'autres termes ces lames 25 et 26 sont flexibles dans la direction perpendiculaire à leur plan qui est lui-même perpendiculaire au plateau. Par contre, elles sont conçues pour ne pas fléchir latéralement, ni se tordre, ni à fortiori s'étirer ou se comprimer, tout au moins sous l'effet des contraintes qu'elles peuvent être amenées à subir dans le réducteur lorsque celui-ci fonctionne normalement.

Avant de parler plus en détail de leur forme il faut encore préciser que dans le mode d'exécution que l'on est en train de décrire elles ne constituent en fait qu'une seule pièce, par exemple en acier ou en aluminium, avec le plateau 24 et l'arbre de sortie 21. Toutefois, il est bien clair que l'on pourrait prévoir de les usiner séparément et de les fixer ensuite sur le plateau par vissage ou soudage. Il en est de même d'ailleurs en ce qui concerne l'arbre 21.

Comme le montrent surtout la figure 2 et la figure 3 qui est une vue en coupe partielle de la pièce en question suivant le plan III-III représenté sur cette figure 2, chacune des lames 25 et 26 présente une partie principale relativement mince en forme de fourche 27, respectivement 28, de largeur à peu près constante, avec deux branches 29, respectivement 30, sensiblement parallèles. D'un côté la lame s'épaissit et s'élargit pour former une embase 31, respectivement 32, par laquelle elle est liée au plateau en un endroit situé au bord de celui-ci. De l'autre côté, les branches 29, 30 se prolongent par des épanouissements 33, respectivement 34, qui leur sont perpendiculaires et qui présentent des trous 35, respectivement 36, dans lesquels sont simplement chassés les extrémités de l'axe du pignon satellite.

On peut donc changer facilement les pignons lorsque c'est nécessaire. De plus, rien n'empêche de prévoir dans le plateau des trous en regard de leurs axes comme ceux, 37 et 38, qui sont représentés sur la figure 1 pour faciliter encore plus leur démontage et leur remontage.

D'autre part, le réducteur des figures 1 et 2 comporte aussi, bien entendu, une couronne dentée intérieurement et radialement déformable 39, de préférence en acier, avec laquelle engrènent également les deux pignons satellites 7 et 8 et qui joue vis-à-vis de ceux-ci le même rôle que la couronne du réducteur connu dont on a parlé, c'est-à-dire qu'elle les pousse en permanence contre le pignon d'attaque 6 et ceci grâce à la flexibilité des lames 25 et 26. Si le diamètre du cercle circonscrit aux pignons est par exemple de 40 mm environ, le diamètre primitif de la denture de la couronne

6 0229958

peut être inférieur de 0,5 mm à celui-ci. En regardant également la vue en perspective cavalière de la figure 4, on constate qu'ici cette couronne n'est immobilisée en rotation que par deux languettes 40 et 41 qui sont liées à elle par une de leurs extrémités en deux points diamétralement opposés et dont les autres extrémités sont solidaires d'une bague rigide 42 percée de trous 43 et prise entre le carter 1 et le couvercle 16, le tout c'est-à-dire la couronne, les languettes et la bague étant réalisé avantageusement en une seule pièce.

Naturellement, les languettes 40 et 41 ont non seulement une minceur mais aussi une longueur suffisantes pour ne pas s'opposer à la déformation radiale de la couronne.

Ceci explique la présence du bossage interne 19 du couvercle du carter car si les languettes ont besoin d'être assez longues pour être très flexibles dans la direction perpendiculaire à leur plan, il y a tout intérêt aussi, pour le bon fonctionnement du réducteur, à ce que le premier palier 22 dans lequel passe l'arbre de sortie 21 soit près du plateau 24.

A ce propos il est utile de préciser que cet arbre 21 présente deux épaulements qui viennent buter latéralement contre les paliers 22 et 23 afin de l'empêcher de se déplacer axialement dans le sens qui va de l'intérieur à l'extérieur du carter. Dans l'autre sens ce mouvement axial doit être évité en prévoyant sur l'arbre de sortie des moyens externes non représentés, par exemple une bague ou un pignon de sortie amovible.

Enfin, comme celui qui a fait l'objet de la demande de brevet français précitée, le réducteur représenté sur le dessin comprend également des moyens pour faire en sorte que la couronne continue à engrener correctement avec les pignons satellites en cas de charge importante, moyens qui sont constitués par un bossage interne 44 du carter qui entoure cette couronne en ne laissant qu'un faible jeu entre lui et elle.

Il est bien clair que l'invention n'est pas limitée au mode d'exécution qui vient d'être décrit et que l'on pourrait en imaginer beaucoup d'autres sans sortir du cadre de celle-ci.

Par exemple, on pourrait remplacer le bossage interne dont il vient d'être question par un anneau rigide flottant comme celui que l'on trouve dans la demande de brevet français.

On pourrait également prévoir plus de deux languettes pour tenir la couronne sans forcément les placer toutes d'un même côté de celle-ci.

Ces languettes pourraient présenter une ou plusieurs parties amincies pour augmenter leur flexibilité.

Leurs extrémités situées du côté opposé à celui de la couronne pourraient être liées au carter, non pas par l'intermédiaire d'une bague, mais directement et pas nécessairement en étant prises entre le carter et son couvercle.

Il serait possible aussi de fixer ces languettes de façon à laisser à la couronne la liberté de se déplacer légèrement dans la direction axiale, ce qui lui permettrait de se placer automatiquement dans la meilleure position au cas où il y aurait des défauts dans le train épicycloïdal.

En ce qui concerne les lames qui portent les pignons satellites, elles pourraient très bien ne pas avoir une partie principale à la fois de largeur et d'épaisseur constantes. Elles pourraient également ne pas être planes mais cintrées mais il serait souhaitable alors qu'elles soient épaisses et qu'elles présentent un amincissement local afin de rester rigides dans les directions voulues.

Il y aurait aussi la possibilité de réaliser les pignons satellites différemment, par exemple en remplaçant les roulements à billes par des roulements à aiguilles, et celle de fixer leurs axes au bout des lames non pas simplement en les chassant dans des trous mais, par exemple, en utilisant des bagues de fixation ou en les soudant.

Par ailleurs, on pourrait en prévoir plus de deux mais sans chercher à aller au-delà de trois ou quatre car il est bien évident qu'à partir d'un certain moment il ne serait plus possible d'augmenter le nombre de ces pignons sans réduire leur diamètre et, par conséquent, le rapport de réduction du train épicycloïdal. De plus, même en admettant que l'on accepte d'avoir un rapport faible, il y a deux autres raisons qui font que l'on n'a pas intérêt à trop augmenter ce nombre. Tout d'abord, plus il y a de pignons satellites, plus la couronne a de la peine à se déformer et plus la

8    0229958

charge supportée par ces derniers et par le pignon d'attaque est importante, même lorsque le couple d'entrée est nul. Ensuite, plus il y a de pignons, plus il faut de lames pour les porter et plus le plateau auquel elles sont liées doit être grand, ce qui peut avoir pour effet d'augmenter l'encombrement du réducteur.

Enfin, qu'il s'agisse ou non du mode de réalisation qui a été décrit, il y a toujours la possiblité de monter en série deux réducteurs selon l'invention ou plus dans un même carter.

REVENDICATIONS

1. Réducteur de vitesse comprenant:
- un arbre d'entrée (5) et un arbre de sortie (21);
- un pignon planétaire (6) solidaire de l'arbre d'entrée;
- un plateau (24) disposé coaxialement avec l'arbre d'entrée et auquel est couplé l'arbre de sortie;
- au moins deux pignons satellites (7, 8) dont les axes (9, 10) sont solidaires du plateau et qui engrènent avec le pignon planétaire;
- une couronne radialement déformable (39) qui présente une denture intérieure avec laquelle engrènent également les pignons satellites, ladite denture ayant un diamètre primitif inférieur au diamètre du cercle circonscrit à l'ensemble des pignons satellites en position de fonctionnement afin que la couronne exerce sur chacun de ces pignons satellites une force radiale qui le presse contre le pignon planétaire; et
- des moyens (40, 41, 42) pour tenir la couronne de façon à l'immobiliser en rotation tout en lui permettant de se déformer radialement,
caractérisé par le fait que chaque pignon satellite (7, 8) est porté par une lame (25, 26) dont une extrémité (31, 32) est liée rigidement au plateau (24) et qui est déformable élastiquement dans la direction qui permet à la couronne (39) de presser ledit pignon satellite contre le pignon planétaire (6) et rigide dans les autres directions.

2. Réducteur selon la revendication 1, caractérisé par le fait que chacune des lames (25, 26) qui portent les pignons satellites (7, 8) présente une partie principale mince (27, 28) en forme de fourche avec deux branches sensiblement parallèles entre elles (29, 30), qui se prolongent par deux épanouissements respectifs (33, 34) percés de trous (35, 36) dans lesquels passe l'axe (9, 10) du pignon satellite correspondant.

3. Réducteur selon la revendication 2, caractérisé par le fait que ladite partie principale (27, 28) est sensiblement plane et de largeur constante.

4. Réducteur selon la revendication 2 ou 3, caractérisé par le fait que, du côté opposé auxdites branches (29, 30) de la fourche, la partie principale (27, 28) de chaque lame (25, 26) se prolonge par une partie plus large et plus épaisse qu'elle qui forme une embase (31, 32) par laquelle ladite lame est liée au plateau (24).

5. Réducteur selon la revendication 4, caractérisé par le fait que lesdites lames (25, 26) et ledit plateau (24) sont faits d'une seule pièce.

6. Réducteur selon la revendication 5, caractérisé par le fait que ledit arbre de sortie (21) fait également partie de ladite pièce.

7. Réducteur selon l'une quelconque des revendications 2 à 6, caractérisé par le fait que chaque pignon satellite (7, 8) comprend un roulement à billes (11, 12) monté autour de son axe (9, 10) et une bague dentée (13, 14) placée autour dudit roulement.

8. Réducteur selon la revendication 7, caractérisé par le fait que ledit roulement (11, 12) est chassé sur ledit axe (9, 10) et que les extrémités de ce dernier sont chassées dans les trous (35, 36) des épanouissements (33, 34) de la lame (25, 26) qui porte ledit pignon (7, 8).

9. Réducteur selon la revendication 8, caractérisé par le fait que ledit plateau (24) présente un trou (37, 38) en regard de l'axe (9, 10) de chaque pignon satellite (7, 8).

10. Réducteur selon l'une quelconque des revendications précédentes, caractérisé par le fait que les moyens pour tenir la couronne (39) comprennent des languettes élastiquement déformables (40, 41) qui s'étendent axialement par rapport à elle et qui ont chacune une extrémité liée rigidement à ladite couronne et une autre solidaire d'une partie fixe (1, 16) du réducteur.

11. Réducteur selon la revendication 10, caractérisé par le fait que lesdites languettes (40, 41) se trouvent toutes d'un même côté de ladite couronne (39).

12. Réducteur selon la revendication 11, caractérisé par le fait que lesdites languettes (40, 41) sont au nombre de deux et sont liées à la couronne (39) en deux points à peu près diamétralement opposés de celle-ci.

13. Réducteur selon la revendication 11 ou 12, caractérisé par le fait que, du côté opposé à la couronne (39), les extrémités

0229958

desdites languettes (40, 41) sont toutes liées à une même bague rigide (42), solidaire de ladite partie fixe (1, 16) du réducteur.

14. Réducteur selon la revendication 13, caractérisé par le fait que ladite couronne (39), lesdites languettes (40, 41) et ladite bague (42) ne forment qu'une seule pièce.

15. Réducteur selon la revendication 13 ou 14, caractérisé par le fait qu'il comprend également un carter (1) fermé par un couvercle (16) et que ladite bague (42) est serrée entre ce carter et ce couvercle.

16. Réducteur selon la revendication 15, caractérisé par le fait que ledit carter (1) présente un bossage interne (44) qui entoure ladite couronne (39) de façon à assurer un engrènement correct de celle-ci avec les pignons satellites (7, 8) même lorsque le réducteur est soumis à de fortes charges.

17. Réducteur selon l'une quelconque des revendications précédentes, caractérisé par le fait que lesdits pignons satellites (7, 8) sont au nombre de deux.

Fig. 2    0229958

Fig. 1

*Fig. 2*

*Fig. 3*

*Fig.4*

Office européen
des brevets

0229958

Numéro de la demande

RAPPORT DE RECHERCHE EUROPEENNE

EP   86 11 6967

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 382 626  (RENAULT)<br><br>* Page 3, ligne 12 - page 4, ligne 13; page 6, ligne 36 - page 7, ligne 19; figures * | 1,16, 17 | F 16 H    1/28 |
| | --- | | |
| A | FR-A-2 447 491  (RENAULT)<br><br>* Page 13; figures * | 1,16, 17 | |
| | --- | | |
| A | US-A-2 971 407  (KATZ)<br>* En entier * | 1 | |
| | --- | | |
| A | US-A-3 257 869  (SHARPLES)<br>* Colonne 3, lignes 5-15;  figure 1 * | 1 | |
| | --- | | DOMAINES TECHNIQUES RECHERCHES (Int. Cl.4) |
| A | US-A-3 314 310  (QUENNEVILLE)<br>* En entier * | 1 | F 16 H |
| | --- | | |
| A | US-A-2 666 344  (BOECK)<br>* Figure 1 * | 1 | |
| | --- | | |
| A | US-A-3 143 899  (YORK)<br>* En entier * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 03-02-1987 | MENDE H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82